# EUROPEAN PATENT SPECIFICATION

(11) **EP 1 675 198 B1**
(45) Date of publication and mention of the grant of the patent: **10.07.2013**
(21) Application number: 05110879.3
(22) Date of filing: 17.11.2005
(51) Int. Cl.: H01M 2/10

(54) **Battery-holder assembly for a vehicle, especially an industrial vehicle**
Batteriehaltersatz für ein Farhrzeug, insbesondere ein industrielles Fahrzeug
assemblage porte batterie pour un vehicule, en particulier pour un vehicule industriel

(30) Priority: 23.12.2004 IT MI20042471
(43) Date of publication of application: 28.06.2006
(73) Proprietor: IVECO S.p.A., 10156 Torino (IT)
(72) Inventor: BANDINI, Walter, 10036, SETTIMO TORINESE (IT); MAGRI, Gianpaolo, 80126, NAPOLI (IT)
(74) Representative: Borsano, Corrado

(56) References cited:
- EP-A- 0 662 725
- WO-A-99/36974
- US-B1- 6 224 998
- US-B1- 6 406 812

## Description

### DESCRIPTION

This invention relates to improvements to a battery-holder assembly for a vehicle, especially an industrial vehicle.

Particular attention must be paid to the electrical power supply of a vehicle, especially an industrial vehicle, in order to avoid problems such as short-circuits, that may occur in situations in which the electrical current paths are exposed to the risk of corrosion or deterioration due to atmospheric factors, or accidental events, or peeling, to which cable insulation sheathing is particularly prone. Another risk factor is related to the presence of too many cables placed too close together, especially in the area around the battery box, a situation which also renders maintenance and repair operations more difficult.

US 6224998 discloses a battery assembly for use in a vehicle, the battery being supported on a tray secured to a frame member. A heat shield is provided. EP 662725 discloses a battery tray assembly comprising a power cord connected to the terminals.

The purpose of this invention is to overcome the drawbacks described above with improvements to a battery-holder assembly for a vehicle, especially an industrial vehicle, in order to guarantee protection against short-circuits between "hot" cables on the frame, reduce the number of positive cables in the area around the battery box, improve accessibility from the ground to the poles of the battery, improve the passage of "hot" cables on the frame.

In particular this invention relates to improvements to a battery-holder assembly for a vehicle, especially an industrial vehicle, as described more fully in the claims, which are an integral part of this description.

The purposes and advantages of this invention will become clear from the following detailed description of an embodiment and the alternative embodiments thereof, and the drawings that are attached hereto, which are merely illustrative and not limitative, of which:
figures 1 and 2 are front and side views respectively of a battery-holder assembly according to this invention;
figures 3a and 3b illustrate two alternative wiring diagrams.
figures 4a and 4b illustrate an electrical cable clamp plate and cable terminals respectively.

The same reference numbers and letters are used in the drawings to indicate the same components.

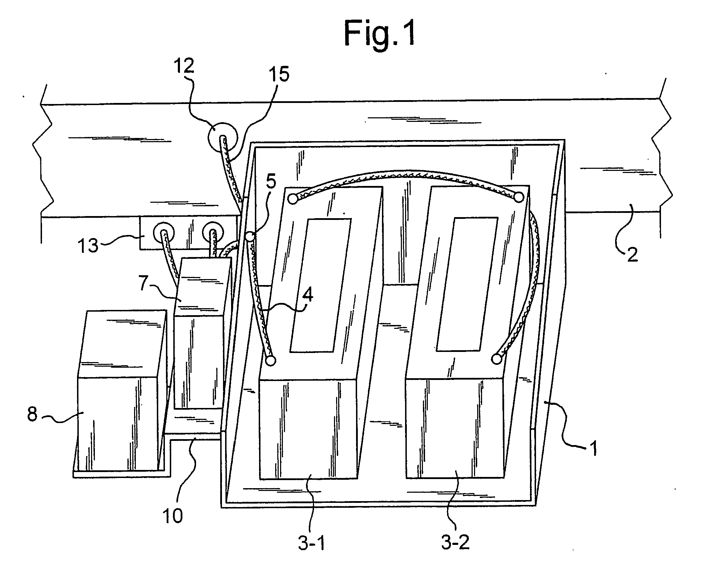

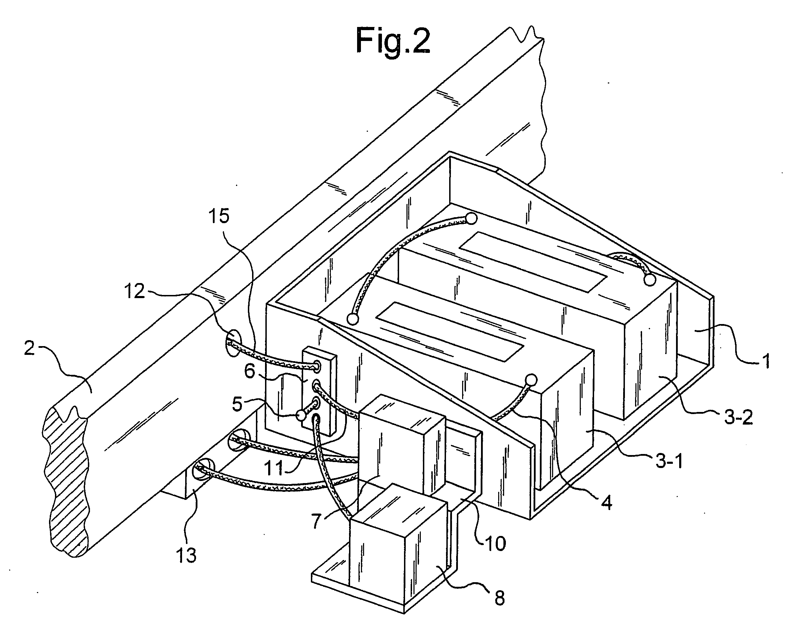

With reference to figures 1 and 2, there is a battery box 1, fixed laterally to a frame side member 2 of the vehicle. The box 1 houses one or more batteries (two are visible in the drawings, 3-1 and 3-2), arranged at right angles to the frame side member, and thus to the vehicle frame, in order to optimize the use of space and make it easier to access the hot (positive "+") terminals of the batteries.

The batteries may however also be arranged so that they are parallel to the frame side member

In order to reduce the number of positive cables inside the battery box, there is only one cable 4 connected to the positive "+" of the battery 3-1 and to an insulating through-wall pin 5 on the side wall of the box: this means that the positive terminal is brought outside the box. The batteries are connected in series and the negative pole is connected to the vehicle's ground in a known way.

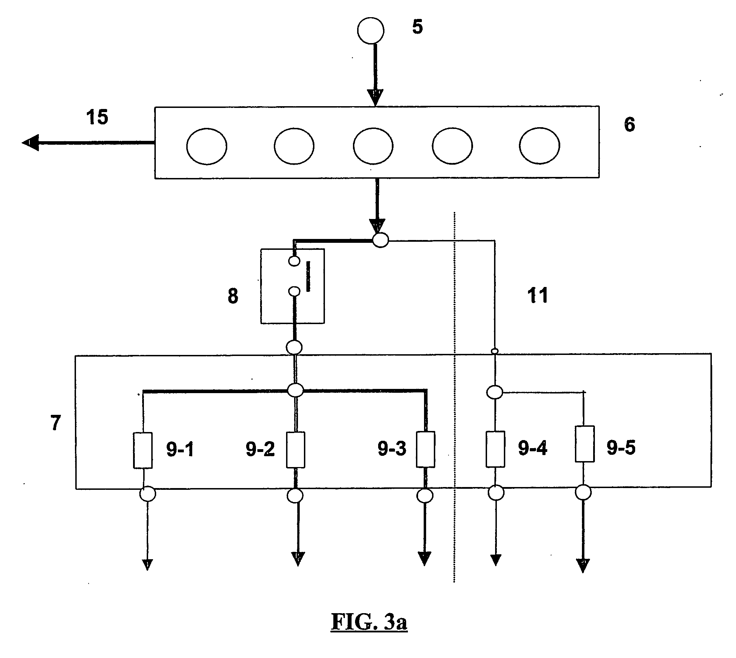

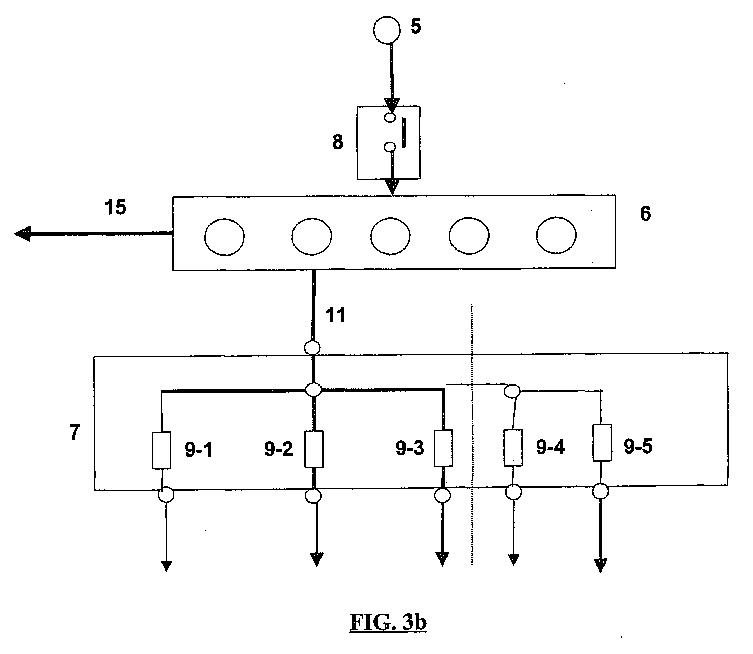

An electrical plate 6 is mounted on the side of the battery box 1 and receives the positive voltage from the battery, via the through-wall pin 5, or the positive voltage downstream of the battery disconnector, according to the wiring diagrams as described below with reference to figures 3a and 3b.

Electrical wires leave the plate 6 and carry the positive voltage to the other elements.

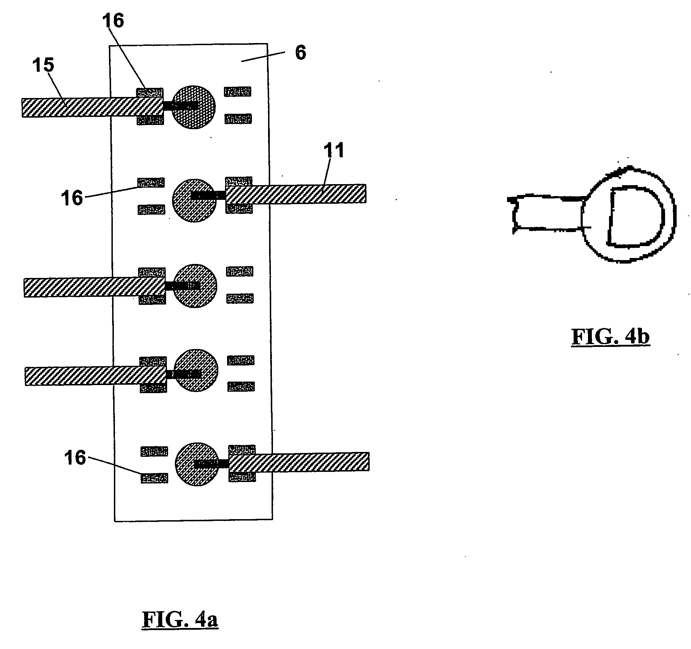

In an example of embodiment, fig. 4a, the plate 6 consists of a terminal plate made of tinned copper or brass, that is attached to the battery box by means of insulating screws (for example M6 standard). The various electrical cables are fastened to the plate 6 by means of anti-rotation terminals 14 (for example as illustrated in fig. 4b) so that the electrical cables are substantially parallel to the ground.

Alternatively the electrical cables may be prevented from rotating by means of projecting parts 16 on the plate 6 at the sides of the cable positions (11, 15).

The plate 6 may be equipped with a protective cover that encloses the plate completely.

One or more fuse boxes 7 and a disconnecting switch 8 are attached to a bracket 10 that is in turn mounted on the side wall of the box 1 so as to project from said wall.

An example of the electrical connections between the various elements is shown in figure 3a. From the through-wall pin 5 the positive voltage is carried to the plate 6. There may be an electrical connection 15 from the plate 6 directly to the devices to be powered without passing through the fuse box 7. There may be a direct electrical connection 11 from the plate 6 to one or more fuses in the box 7, for example 9-4 and 9-5. There may be an electrical connection from the plate 6 to other fuses in the box 7, for example 9-1, 9-2 and 9-3, via the disconnector 8, that can be used to disconnect the electrical connection towards the devices of the vehicle powered via these fuses, for example for maintenance purposes.

An example of an alternative arrangement of the electrical connections between the various elements is illustrated in figure 3b, in which, compared to figure 3a, the positions of the disconnecting switch 8 and the plate 6 are reversed. From the through-wall pin 5 the positive voltage is carried to the plate 6 that distributes it either to the fuse boxes 7 or directly to the devices to be powered by means of the electrical connection 15.

The disconnecting switch 8 may be of the mechanical switch or lever type, or of the electrical/electronic type. The fuse box 7 may be a single box or divided into sections, for example with one part containing non-disconnectable fuses, and another for disconnectable fuses, or there may be several separate boxes.

In order to facilitate the connection of the cables in the fuse box 7, the components are arranged as sub-assemblies comprising respectively:
- the fuse box 7 complete with all the electrical cables;
- the electrical disconnector 8;
- the plate 6.

Furthermore some electrical cables 15, for example those used to supply power to devices such as the starting motor or the heater (not shown in the drawing), are not protected by fuses. These can be made to pass, directly from the plate 6, through a through-hole 12 in the frame side member 2 near the case 1.

Other cables leading out of the fuse box 7, used to supply power to other devices, pass under the frame side member 2, and are fastened by means of appropriate cable guides 13 connected to the longitudinal member.

## Claims

1. A battery-holder assembly for a vehicle, especially an industrial vehicle, **characterized in that** said battery-holder assembly comprises:
- a battery box (1), fixed laterally to a frame side member(2) of the vehicle;
- one or more batteries housed in said box (3-1, 3-2) and arranged at right angles or parallel to the longitudinal member;
- an electrical connection (4) that connects a "hot" pole, i.e. the positive terminals of the batteries to the outside of the box via a through-wall pin (5) electrically insulated from the box;
- one or more fuse boxes (7) and one or more disconnecting switches (8) attached to a bracket (10) that is in turn mounted on a side wall of the box (1) so as to project from said wall;
- said through-wall pin (5) being connected either to said one or more disconnectors (8) or to an electrical plate (6), mounted on the side of the box (1); said plate (6) being connected electrically to said one or more fuse boxes (7) either directly or via said one or more disconnectors (8).

2. A battery-holder assembly for a vehicle according to claim 1, **characterized in that** said electrical plate (6) comprises a terminal plate made of tinned copper or brass, that is attached to said box (1) by means of insulating screws, electrical cables being attached to the plate by means of anti-rotation elements (14) so as to be substantially parallel to the ground.

3. A battery-holder assembly for a vehicle according to claim 1, **characterized in that** said electrical plate (6) comprises one or more electrical connections (15) directly to devices to be powered without passing through said fuse box (7).

4. A battery-holder assembly for a vehicle according to claim 1, **characterized in that** said one or more disconnectors (8) are of the mechanical switch or lever type, or of the electronic type.

5. A battery-holder assembly for a vehicle according to claim 1, **characterized in that** said one or more fuse boxes (7) are single, or divided into sections, comprising a part containing fuses that cannot be disconnected by means of said disconnector (8), and/or disconnectable fuses, or comprising several separate boxes.

6. A battery-holder assembly for a vehicle according to claim 1, **characterized in that** they comprise electrical cables that, upon leaving said one or more fuse boxes (7) or said one or more disconnectors (8), are made to pass through a through-hole (12) in said frame side member (2) near said box (1), and/or through cable guides (13) mounted on said frame said member (2).

7. A battery-holder assembly for a vehicle according to claim 1, **characterized in that** said anti-rotation elements consist of anti-rotation terminals (14) or projecting parts (16) on said electrical plate (6) at the sides of the cable positions.

## Patentansprüche

1. Batteriehaltersatz für ein Fahrzeug, insbesondere ein industrielles Fahrzeug, **dadurch gekennzeichnet, dass** der Batteriehaltersatz aufweist:
- einen Batteriekasten (1), der seitlich an einem Rahmenlängsträger (2) des Fahrzeugs befestigt ist;
- eine oder mehrere Batterien (3-1, 3-2), die in dem Kasten untergebracht ist/sind, und die in rechten Winkeln oder parallel zu dem Längsträger angeordnet ist/sind;
- eine elektrische Verbindung (4), die einen "heißen" Pol, das heißt die positiven Anschlüsse der Batterien mit der Außenseite von dem Kasten über einen durch die Wand gehenden Anschlussstift (5), der elektrisch von dem Kasten isoliert ist, verbindet;
- ein oder mehrere Sicherungskästen (7) und ein oder mehrere Trennschalter (8), die an einer Halterung (10) angebracht sind, die wiederum an einer Seitenwand des Kastens (1) angeordnet ist, um von der Wand hervorzustehen;
- wobei der durch die Wand gehende Anschlussstift (5) entweder mit dem einen oder den mehreren Trennern (8) oder mit einer elektrischen Platte (6), die an der Seite des Kastens (1) angeordnet ist, verbunden ist, wobei die Platte (6) mit dem einen oder den mehreren Sicherungskästen (7) entweder direkt oder über den einen oder die mehreren Trenner (8) elektrisch verbunden ist.

2. Batteriehaltersatz für ein Fahrzeug nach Anspruch 1, **dadurch gekennzeichnet, dass** die elektrische Platte (6) eine Anschlussplatte aufweist, die aus verzinntem Kupfer oder Messing hergestellt ist, das an den Kasten (1) durch isolierende Schrauben angebracht ist, wobei elektrische Kabel durch Anti-Rotationselemente (14) an die Platte angebracht sind, um im Wesentlichen parallel zur Erde zu sein.

3. Batteriehaltersatz für ein Fahrzeug nach Anspruch 1, **dadurch gekennzeichnet, dass** die elektrische Platte (6) eine oder mehrere elektrische Verbindungen (15) direkt zu Geräten aufweist, die ohne Passieren durch den Sicherungskasten (7) mit Strom versorgt werden.

4. Batteriehaltersatz für ein Fahrzeug nach Anspruch 1, **dadurch gekennzeichnet, dass** der eine oder die mehreren Trenner (8) aus dem mechanischen Schalter oder Hebelmodell oder aus dem elektronischen Modell ist/sind.

5. Batteriehaltersatz für ein Fahrzeug nach Anspruch 1, **dadurch gekennzeichnet, dass** der eine oder die mehreren Sicherungskästen (7) einzeln oder in Abschnitte unterteilt ist/sind, die einen Teil enthaltend Sicherungen, die nicht durch den Trenner (8) getrennt werden können, und/oder trennbare Sicherungen aufweisen oder mehrere separate Kästen aufweisen.

6. Batteriehaltersatz für ein Fahrzeug nach Anspruch 1, **dadurch gekennzeichnet, dass** sie elektrische Kabel aufweisen, die bei Verlassen des einen oder der mehreren Sicherungskästen (7) oder des einen oder der mehreren Trenner (8) gemacht sind, um durch eine Durchgangsbohrung (12) in dem Rahmenlängsträger (2) nahe des Kastens (1) durchzuführen, und/oder durch Kabelführungen (13), die an dem Rahmenlängsträger (2) angeordnet sind.

7. Batteriehaltersatz für ein Fahrzeug nach Anspruch 1, **dadurch gekennzeichnet, dass** die Anti-Rotationselemente aus Anti-Rotationsanschlüssen (14) oder hervorstehenden Teilen (16) auf der elektrischen Platte (6) an den Seiten der Kabelpositionen bestehen.

## Revendications

1. Ensemble porte-batterie pour un véhicule, en particulier pour un véhicule industriel, **caractérisé en ce que** ledit ensemble porte-batterie comprend :
- un boîtier de batterie (1) fixé latéralement à un élément latéral de châssis (2) du véhicule ;
- une ou plusieurs batteries logées dans ledit boîtier (3-1, 3-2) et disposées à angles droits ou parallèlement à l'élément longitudinal ;
- une connexion électrique (4) qui connecte un pôle « chaud », à savoir, les bornes positives des batteries à l'extérieur du boîtier par le biais d'une broche traversant la paroi (5) isolée électriquement du boîtier ;
- une ou plusieurs boîtes à fusibles (7) et un ou plusieurs sectionneurs (8) attachés à une support (10) qui est à son tour monté sur une paroi latérale du boîtier (1) de sorte à faire saillie depuis ladite paroi ;
- ladite broche traversant la paroi (5) étant connectée soit audit un ou auxdits plusieurs sectionneur(s) (8), soit à une plaque électrique (6), montée sur le côté du boîtier (1) ; ladite plaque (6) étant connectée électriquement à ladite une ou auxdites plusieurs boîte(s) à fusibles (7) soit directement, soit par le biais dudit un ou desdits plusieurs sectionneur(s) (8).

2. Ensemble porte-batterie pour un véhicule selon la revendication 1, **caractérisé en ce que** ladite plaque électrique (6) comprend une plaque à bornes constituée de cuivre ou de laiton étamé, qui est fixée audit boîtier (1) au moyen de vis isolantes, des câbles électriques étant attachés à la plaque au moyen d'éléments anti-rotation (14) de sorte à être sensiblement parallèles au sol.

3. Ensemble porte-batterie pour un véhicule selon la revendication 1, **caractérisé en ce que** ladite plaque électrique (6) comprend une ou plusieurs connexions électriques (15) directement aux dispositifs devant être alimentés sans traverser ladite boîte à fusibles (7).

4. Ensemble porte-batterie pour un véhicule selon la revendication 1, **caractérisé en ce que** ledit un ou lesdits plusieurs sectionneur(s) (8) sont du type à interrupteur mécanique ou à levier ou du type électronique.

5. Ensemble porte-batterie pour un véhicule selon la revendication 1, **caractérisé en ce que** ladite une ou lesdites plusieurs boîte(s) à fusibles (7) sont simples ou divisées en sections, comprenant une partie contenant des fusibles qui ne peuvent pas être déconnectés au moyen dudit sectionneur (8) et/ou des fusibles déconnectables, ou comprenant plusieurs boîtes séparées.

6. Ensemble porte-batterie pour un véhicule selon la revendication 1, **caractérisé en ce qu'**il comprend des câbles électriques qui, lorsqu'ils quittent ladite une ou lesdites plusieurs boîte(s) à fusibles (7) ou ledit un ou lesdits plusieurs sectionneur(s) (8), passent à travers un trou traversant (12) dans ledit élément latéral de châssis (2) près dudit boîtier (1) et/ou à travers les guide-câbles (13) montés sur ledit élément latéral de châssis (2).

7. Ensemble porte-batterie pour un véhicule selon la revendication 1, **caractérisé en ce que** lesdits éléments anti-rotation sont constitués de bornes anti-rotation (14) ou de parties en saillie (16) sur ladite plaque électrique (6) sur les côtés des positions de câble.
